**Europäisches Patentamt**

**European Patent Office**

**Office européen des brevets**

(19)

(11) Veröffentlichungsnummer : **0 077 485**
**B1**

(12) **EUROPÄISCHE PATENTSCHRIFT**

(45) Veröffentlichungstag der Patentschrift :
**05.03.86**

(21) Anmeldenummer : **82109128.7**

(22) Anmeldetag : **02.10.82**

(51) Int. Cl.⁴ : **C 09 K 11/77**

(54) **Anorganischer Leuchtstoff.**

(30) Priorität : **21.10.81 DE 3141747**

(43) Veröffentlichungstag der Anmeldung :
**27.04.83 Patentblatt 83/17**

(45) Bekanntmachung des Hinweises auf die Patenterteilung : **05.03.86 Patentblatt 86/10**

(84) Benannte Vertragsstaaten :
**AT BE CH FR GB IT LI NL SE**

(56) Entgegenhaltungen :
**GB-A- 1 208 565**
**DERWENT JAPANESE PATENTS REPORT, Band U,**
**Nr. 40, Teil L, 6. November 1973, Ref. 59956u,**
**Derwent Publications Ltd., London, G.B.**
**CHEMICAL ABSTRACTS, Band 93, Nr. 8, 25. August**
**1980, Seite 93, Spalte 1, Nr. 85917x, Columbus, Ohio,**
**USA G. BRAUER et al.: "Oxide perovskites with**
**tetravalent dysprosium and compounds of the**
**Ba3RE409-type (RE = rare earth element)**
**CHEMICAL ABSTRACTS, Band 89, Nr. 10, 4. Septem-**
**ber 1978, Seite 521, Nr. 83192a, Columbus, Ohio, USA**
**S. KEMMLER-SACK: "On the polymorphy of perovski-**
**tes A2 (B1/2RE1/2)M06"**
**Die Akte enthält technische Angaben, die nach dem**
**Eingang der Anmeldung eingereicht wurden und die**
**nicht in dieser Patentschrift enthalten sind.**

(73) Patentinhaber : **Kemmler-Sack, Sibylle, Prof. Dr.**
**Moltkestrasse 10**
**D-7400 Tübingen (DE)**

(72) Erfinder : **Kemmler-Sack, Sibylle, Prof. Dr.**
**Moltkestrasse 10**
**D-7400 Tübingen (DE)**

(74) Vertreter : **Rücker, Wolfgang, Dipl.-Chem.**
**Hubertusstrasse 2**
**D-3000 Hannover 1 (DE)**

## Beschreibung

Die Erfindung betrifft einen anorganischen Leuchtstoff, bestehend aus einem Festkörper mit darin enthaltenem Aktivator, der bei Anregung mit einer energiereichen Strahlung sichtbares Licht aussendet.

Solche anorganischen Leuchtstoffe, die einen Aktivator enthalten und die durch Anregung mit einer energiereichen Strahlung, beispielsweise einer Korpuskular-Strahlung (Elektronen, $\alpha$-Teilchen, Protonen, Mesonen), bzw. UV-Strahlung, Licht aussenden oder eine Lumineszenz hervorrufen, sind an sich bekannt und bilden die Grundlage für die praktische Anwendung solcher Leuchtstoffe in der Beleuchtungstechnik und bei der Wiedergabe von elektronischen Signalen. Es handelt sich dabei um Festkörper mit bestimmten Gittern, in die die Aktivatoren in Form von Fremdmetallkationen eingebaut sind und die durch die Anregung mit beispielsweise Kathodenstrahlen sichtbares Licht aussenden.

Der Einbau von Aktivatoren ist an sich bekannt, auch das Verfahren, wie dieser Einbau vorgenommen ist. Solche bekannten Leuchtstoffe bestehen beispielsweise aus Zinksulfid und der Aktivator aus Kupferkationen. Bei einer Anregung mit einer energiereichen Strahlung leuchten diese Leuchtstoffe intensiv grün. Man verwendet diese Leuchtsoffe für beispielsweise Lichtreklamen und dergleichen mehr.

Bei diesen Festkörpern handelt es sich ausschließlich um synthetisch hergestellte Festkörper, wobei die Lichtemission von den Fremdionen, den Aktivatoren, ausgeht. Die Farbe des Lichts ist sowohl vom verwendeten Aktivator als auch vom Wirtsgitter, also dem Gitter des Feststoffes, abhängig. Außer den obengenannten Aktivatoren kommen auch die Metallionen der Übergangselemente und in zunehmendem Maße die Ionen der dreiwertigen Seltenen Erden in Frage. In der britischen Patentschrift 1 208 565 werden Leuchtstoffe beschrieben deren Wirtsgitter aus $Y_2O_3$ besteht, das ein Aktivatorion oder ein Aktivatorion und ein Ko-aktivatorion aus der Reihe der Seltenen Erden enthält.

Der erste kommerzielle Leuchtstoff mit Seltenen Erden bestand aus mit dreiwertigem Europium dotiertem Yttriumorthovanadat ($YVO_4$ : Eu). Dieser Leuchtstoff wird in Fernsehbildröhren verwendet und trug dazu bei, daß das Farbfernsehen eine rasche Verbreitung erfuhr.

Heute finden die Leuchtstoffe hauptsächlich bei der Beschichtung von Kathodenstrahlröhren aller Art, z. B. Fernsehbildröhren, Sichtgeräten, Computer-Terminals, Oszillographen sowie von Leuchtstoffröhren Verwendung.

Nachteilig bei diesen gesamten bisher bekannten Leuchtstoffen war jedoch der Umstand, daß sich mit ihnen jeweils nur eine Farbe erzeugen ließ, also entweder grün oder rot, oder gelb. Sollen gleichzeitig mehrere Farben erzeugt werden oder sind mehrere Farben erforderlich, so sind entsprechende Kombinationen von Einfarbenleuchtstoffen herzustellen.

Dies kann dadurch geschehen, daß sie getrennt nebeneinander oder übereinander angeordnet werden. In Fernsehbildröhren beispielsweise findet die Nebeneinanderanordnung vorzugsweise statt, da die nach dem Prinzip der additiven Farbzusammensetzung arbeitende Farberzeugung im Fernsehbild durch die drei Grundfarben grün, rot und blau stattfindet. Die entsprechenden Einfarbenleuchtstoffe sind daher in getrennten Arbeitsgängen in einem strich- oder punktförmigen Raster aufzubringen. Das örtliche übereinanderanordnen findet bei Leuchtstoffen auch statt, man spricht dann vom sogenannten Zwiebelschalentyp, wobei ein Einfarbenleuchtstoff von einer Schicht eines zweiten Leuchtstoffes überdeckt ist.

Es ist leicht einzusehen, daß diese Verfahren und Vorrichtungen zur Erzeugung mehrere Leuchtstofffarben, wie beispielsweise rot, grün und blau, auf diese Weise nicht nur arbeits- und apparativaufwendig sind, sondern auch jeweils besondere Zubereitungen von Aktivatorhaltigen Festkörpern erfordern, die wiederum in ganz speziellen Methoden auf oder zwischen die anderen Leuchtstoffe gebracht werden müssen unter Einhaltung bestimmter Raster.

Aufgabe der vorliegenden Erfindung ist es daher, einen Leuchtstoff zu schaffen, der dieses komplizierte Verfahren ablöst, in einfacher Einschichtweise aufbringbar ist und dennoch bei entsprechender Anregung durch eine Strahlung, beispielsweise Kathodenstrahlung, in wenigstens zwei Farben leuchtet.

Erreicht wird das erfindungsgemäß dadurch, daß in einem an sich bekannten Festkörper zwei verschiedene Aktivatoren eingebaut sind, die mit unterschiedlicher Anregungsenergie aktivierbar sind.

In Verfolg des Erfindungsgedankens kann somit ein Leuchtstoff nicht nur in zwei Farben leuchten, sondern auch in drei oder gar vier Farben.

Für die Herstellung eines Zweifarbenleuchtstoffes verwendet man ein Wirtsgitter oder einen Festkörper, in den zwei verschiedene Aktivatoren eingebaut sind, die je nach Anregungsenergie ($v_A$ (1)) bzw. ($v_A$ (2)) hauptsächlich das Spektrum des einen oder des anderen Aktivators emittieren.

Für die Erzeugung grünen oder roten Lichts wird erfindungsgemäß eine Aktivatorenkombination aus $Tb^{3+}$ und $Eu^{3+}$ verwendet. Bei kontinuierlicher Veränderung der Anregungsenergie von $v_A$ (1) bis $v_A$ (2) überstreicht das emittierte Licht dieses Zweifarbenleuchtstoffes alle Farben von grün über gelb und orange bis rot. Durch diese Veränderung oder Variation der Anregungsenergie sind also außer den eigentlichen Emissionsfarben rot und grün noch zahlreiche Zwischentöne erhältlich.

Bei Einbau anderer Zweierkombinationen von Aktivatoren aus der Gruppe der Seltenen Erden bzw. Aktinoiden in das gleiche Wirtsgitter lassen sich weitere Zweifarbenleuchtstoffe erhalten, die in gleicher Weise in Abhängigkeit von der verwendeten Anregungsenergie die typischen Farben der einzelnen Aktivatoren emittieren. So wurde beispielsweise gefunden, daß Kombinationen mit besonders wirksamer Emission die Kationen $Dy^{3+}/Eu^{3+}$ (mit gelber bzw. roter Emission) und $Er^{3+}/Eu^{3+}$ bzw. $Tb^{3+}/Eu^{3+}$ (mit grüner bzw. roter Emission) sind.

In Verfolg des Erfindungsgedankens ist dabei zu beachten, daß bei der Herstellung von Zweifarbenleuchtstoffen die Qualität der Farbtrennung von der Art und der Natur des Wirtsgitters beeinflußt werden kann. Es hat sich nämlich gezeigt, daß eine doppelt aktivierte Verbindung nur dann zwei Farben emittieren kann, wenn für die einzelnen Aktivatoren getrennte Wege zur Aufnahme und Übertragung der Anregungsenergie vorhanden sind.

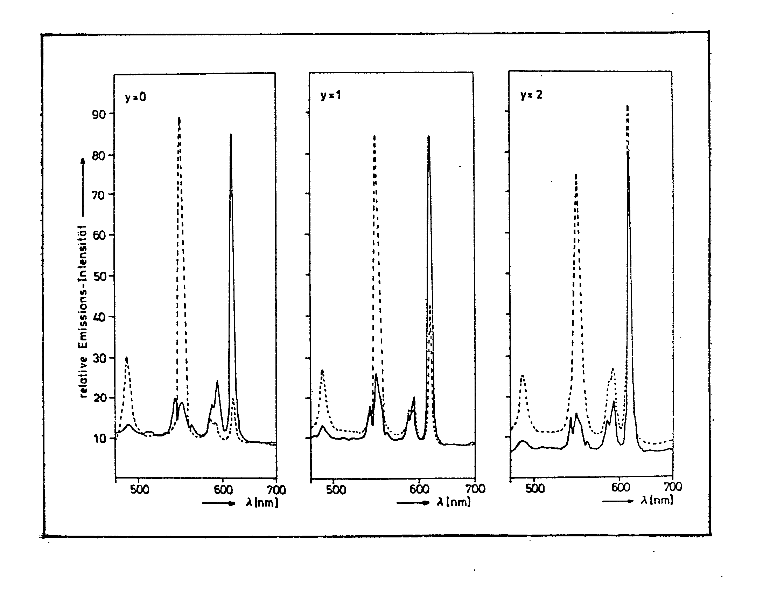

Der Lumineszenzmechanismus eines Zweifarbenleuchtstoffes ist in der beigefügten Abbildung dargestellt.

Zur Aufnahme der Anregungsenergie muß das Gitter über zwei verschiedene angeregte Zustände (Energieniveaus einzelner Gitterbausteine oder Charge transfer-Terme) verfügen. Bei Anregung mit der Energie $v_A$ (1) wird die Energie zunächst vom Gitter des Feststoffes in das entsprechende Energieniveau aufgenommen und anschließend in einem Term gleicher Energie des Aktivators (1) übertragen. Nach Zwischenschaltung mehrerer strahlungsloser Prozesse kehrt der Aktivator (1) unter Emission seines Lichts in den Grundzustand zurück.

Durch Einstrahlung der zweiten Anregerenergie $v_A$ (2) werden die entsprechenden Prozesse bei dem Aktivator (2) ausgelöst. Es wurde gefunden, daß also Zweifarbenleuchtstoffe immer dann entstehen, wenn in einem Wirtsgitter eine Kombination aus zwei Aktivatoren eingebaut werden, die ihre Energie auf unterschiedlichen Wegen aufzunehmen vermögen. Außer den in der Abbildung gezeigten Wegen kann in einigen Fällen noch ein dritter Weg beschritten werden, nämlich die direkte Anregung in einem energiereichen Aktivatorterm. Nach einigen strahlungslosen Prozessen kehrt der Aktivator ebenfalls unter Emission in den Grundzustand zurück.

Eine besonders gute Farbtrennung, d. h. eine besonders reine Farbe des jeweiligen Lichts des Aktivators (1) oder (2) erhält man jedoch nur dann, wenn die entsprechenden Anregungs- und Energieübertragungsprozesse voneinander unabhängig ablaufen. Dies ist stets bei genügend großer Energiedifferenz zwischen $v_A$ (1) und $v_A$ (2) der Fall. Da die Lage von $v_A$ (1) in bezug auf $v_A$ (2) von Wirtsgitter zu Wirtsgitter verschieden sein kann, kommt der Wahl des Wirtsgitters eine entscheidende Bedeutung zu. Bereits durch Variation eines Wirtsgitter-Bestandteils lassen sich die angeregten Gitterterme in ihrer Lage zueinander verschieben. Je nach der erzielten relativen Lage von $v_A$ (1) zu $v_A$ (2) wird die Farbtrennung besser oder schlechter.

Es soll z. B. auf die Emissionsspektren der folgenden Reihe verwiesen werden, aus der die Veränderungen der Liminiszenzemission beim Ersatz des zweiwertigen Bariums durch das zweiwertige Strontium für die Reihe

$$Ba_{2-y}Sr_yLa_{1,85}Eu_{0,1}Tb_{0,05}MgW_2...O_{12}$$
hervorgeht.

In dieser Serie verschiebt sich mit steigendem Strontiumgehalt der für die Anregung des Europiums benötigte Gitterterm nach höheren Energien, während das entsprechende für die Tb-Emission verwendete Gitterniveau etwa lagekonstant bleibt. Dadurch verringert sich die Differenz zwischen den beiden Anregungsenergien ($v_A$ (1) und $v_A$ (2) von 3 800 cm$^{-1}$ (y=o) über 2 500 cm$^{-1}$ (y=1) auf 2 100 cm$^{-1}$ (y=2)). Dies hat zur Folge, daß der Aktivator $Tb^{3+}$ mit y zunehmend nicht mehr allein, sondern nur noch gemeinsam mit dem zweiten Aktivator, $Eu^{3+}$, anregbar wird. In der reinen Sr-Verbindung (y=2) ist bei Verwendung der für die Tb-Emission optimalen Anregungsenergie die stärkste $Tb^{3+}$-Bande ($\sim$ 540 nm) nur noch etwa gleich intensiv wie die stärkste Linie ($\sim$ 615 nm) des gleichzeitig mit angeregten $Eu^{3+}$, so daß eine Mischung beider Eigenfarben, nämlich gelbes Licht, emittiert wird.

Will man von einem Zweifarben- zu einem Dreifarbenleuchtstoff übergehen, ist eine Erweiterung des Energieübertragungsschemas gemäß Abbildung erforderlich, da zur getrennten Anregung der drei verschiedenen Aktivatoren 1, 2, 3 drei unterschiedliche Wege erforderlich sind. Der dritte Anregungsweg kann beispielsweise dadurch geschaffen werden, daß das Wirtsgitter einen dritten angeregten Term zur Verfügung stellt und die Anregungsenergie $v_A$ (3) aufnimmt und sie auf einen geeigneten dritten Aktivator (3) überträgt. Der Aktivator (3) kann dann nach einigen strahlungslosen Prozessen unter Emission (3) in den Grundzustand zurückkehren. Besonderes Interesse kommt Dreifarbenleuchtstoffen für die drei Grundfarben rot, grün und blau zu, da sie auf allen nach dem Prinzip der additiven Farbzusammensetzung arbeitenden Gebieten einsetzbar wären und den Herstellungsprozeß z. B. von Fernsehbildröhren wesentlich erleichtern könnten.

Für die nach entsprechenden Mechanismen funktionierenden Vier- und Mehrfarbenleuchtstoffe müssen in erneuter Erweiterung des Energietransferschemas gemäß Abbildung die benötigten zusätzlichen Wege (4) bis (n) zur Anregung der Aktivatoren (4) bis (n) geschaffen werden.

Da für eine gute Farbtrennung genügend große Energiedifferenzen zwischen den einzelnen Anregungsenergien $v_A$ (1), $v_A$ (2), $v_A$ (3) ... $v_A$ (n) benötigt werden, sind Wirtsgitter erforderlich, die die Aufnahme der entsprechenden Zahl an getrennten Wegen für die Aktivatoren (1), (2), (3) ... (n) ermöglichen. Als Wirtsgitter oder Feststoff für mehrfarbenemittierende Leuchtstoffe kommen beispielsweise hexagonale Sauerstoffperowskite mit oktaedrischen Kationenfehlstellen in Frage, die die Zusammensetzung $A_4 (B,M)_3 \ldots O_{12}$ besitzen. Weitere Wirtsgitter sind beispielsweise Sauerstoffperowskite aus der Reihe $MR_{1-x} \ldots_x O_3$ bzw. Scheelite oder Granate.

## Patentansprüche

1. Anorganischer Leuchtstoff, bestehend aus einem Festkörper mit darin enthaltenem Aktivator, der bei Anregung mit einer energiereichen Strahlung sichtbares Licht aussendet, dadurch gekennzeichnet, daß in dem aus einer chemischen Verbindung bestehenden Festkörper (Wirtsgitter) wenigstens zwei verschiedene Aktivatoren eingebaut sind, die mit unterschiedlicher Anregungsenergie aktivierbar sind und Licht verschiedener Wellenlängen emittieren.

2. Leuchtstoff nach Anspruch 1, dadurch gekennzeichnet, daß in das Wirtsgitter eine Aktivatorkombination aus $Tb^{3+}$-Ionen und $Eu^{3+}$-Ionen eingebaut ist.

3. Leuchtstoff nach Anspruch 1, dadurch gekennzeichnet, daß weitere Zweierkombinationen von Aktivatoren aus der Gruppe der Seltenen Erden bzw. Aktinoiden in das gleiche Wirtsgitter eingebaut sind.

4. Leuchtstoff nach Anspruch 3, dadurch gekennzeichnet, daß die Kombinationen aus der Reihe $Ce^{3+}$, $Eu^{3+}$, $Tb^{3+}$, $Dy^{3+}$, $Er^{3+}$, $Tm^{3+}$, $U^{6+}$ stammen, die bei Aktivierung gelbe, rote, blaue bzw. grüne und rote Lichtemission ergeben.

5. Leuchtstoff nach Anspruch 1 bis 4, dadurch gekennzeichnet, daß die beiden in dem Wirtsgitter enthaltenen Aktivatoren auf getrennten Wegen ihre Anregungsenergie übertragen erhalten, wobei das Gitter über zwei verschieden angeregte Zustände verfügen muß und beide Energieübertragungsprozesse voneinander unabhängig ablaufen.

6. Leuchtstoff nach Anspruch 1 bis 5, dadurch gekennzeichnet, daß für die einzubauenden Aktivatoren ein Wirtsgitter ausgewählt ist, daß eine große Energiedifferenz zwischen $\nu_A$ (1) und $\nu_A$ (2) bzw. $\nu_A$ (2) und $\nu_A$ (3), $\nu_A$ (3) und $\nu_A$ (4) etc. besitzt.

7. Leuchtstoff nach Anspruch 1 bis 6, dadurch gekennzeichnet, daß als Wirtsgitter Kristalltypen dienen von der allgemeinen Formel $MRX_3$, vor allem die Sauerstoffsalze $MRO_3$ und insbesondere Sauerstoff-Perowskite mit oktaedrischen Kationenfehlstellen in der Zusammensetzung $MR_{1-x} \ldots_x O_3$.

## Claims

1. Inorganic luminescent material, consisting of a solid containing in it an activator, which on excitation with high energy radiation emits visible light, characterised by the fact that, in the solid material consisting of a chemical compound (host framework) at least two different activators are contained, which are activated by differing excitation energy sources and emit light of different wavelengths.

2. Luminescent material as in application 1, characterised by the fact that, in the host structure there is contained an activator combination of $Tb^{3+}$ Ions and $Eu^{3+}$ Ions.

3. Luminescent material as in application 1, characterised by the fact that, further dual combinations of activators from the group of rare earths or aktinoids are contained within the same host framework.

4. Luminescent material as in application 1, characterised by the fact that, the combinations originate in the range $Ce^{3+}$, $Eu^{3+}$, $Tb^{3+}$, $Dy^{3+}$, $Er^{3+}$, $Tm^{3+}$, and $U^{6+}$, which on activation produce yellow, red, blue or green and red light emissions.

5. Luminescent material as in applications 1 to 4, characterised by the fact that both the activators contained in the host framework receive their excitation energy transmitted via separate paths, the framework having to have available two states excited in different ways, both energy transmission processes taking place indepently of each other.

6. Luminescent material as in applications 1 to 5, characterised by the fact that, a host framework is selected for the activators which is to contain having a large energy difference between $V_A(1)$ and $_A(2)$ or $V_A(2)$ and $V_A(3)$, $V_A(3)$ and $V_A(4)$ etc.

7. Luminescent material as in applications 1 to 6, characterised by the fact that, for the host framework, types of crystals are used of the general formula $MRX_3$, particularly the oxygen salts $MRO_3$ and in particular oxygen — perowskite with octahedral kation — spaces in the composition $MR_{1-x} \ldots_x O_3$.

## Revendications

1. Substance fluorescente inorganique, constituée d'un solide dans lequel est contenu un activateur lequel, après une excitation par un rayonnement de grande énergie, émet une lumière visible, caractérisée en ce que, dans le solide constitué d'un composé chimique (réseau-hôte) sont incorporés au moins deux activateurs différents, qui peuvent être activés avec des énergies d'excitation différentes et émettent des lumières de longueurs d'onde différentes.

2. Substance fluorescente selon la revendication 1, caractérisée en ce qu'une combinaison d'activateurs, à base d'ions $Tb^{3+}$ et d'ions $Eu^{3+}$ est incorporée dans le réseau-hôte.

3. Substance fluorescente selon la revendication 1, caractérisée en ce que d'autres combinaisons binaires d'activateurs du groupe des terres rares ou des actinoides sont incorporées dans le même réseau-hôte.

4. Substance fluorescente selon la revendication 3, caractérisée en ce que les combinaisons dérivent de la série $Ce^{3+}$, $Eu^{3+}$, $Tb^{3+}$, $Dy^{3+}$, $Er^{3+}$, $Tm^{3+}$, $U^{6+}$ qui, sous activation, donnent une émission lumineuse jaune, rouge, respectivement bleue ou verte et rouge.

5. Substance fluorescente selon les revendications 1 à 4, caractérisée en ce que les deux activateurs contenus dans le réseau-hôte reçoivent de manières différentes leur transfert d'énergie d'excitation, le réseau devant disposer de deux états excités différents, les deux processus de transfert d'énergie devant se dérouler indépendamment l'un de l'autre.

6. Substance fluorescente selon les revendications 1 à 5, caractérisée en ce qu'on sélectionne pour les activateurs à incorporer un réseau-hôte qui présente une différence d'énergie importante entre $V_A(1)$ et $V_A(2)$ ou $V_A(2)$ et $V_A(3)$, $V_A(3)$ et $V_A(4)$, etc.

7. Substance fluorescente selon les revendications 1 à 6, caractérisée en ce que servent de réseau-hôte des types cristallins de formule générale $MRX_3$, surtout les sels oxygénés $MRO_3$, et en particulier la perowskite oxygénée, présentant des défauts cationiques octaédriques, de composition $MR_{1-x\cdots x}O_3$.